# EUROPÄISCHE PATENTSCHRIFT

(11) **EP 2 520 920 B1**
(45) Veröffentlichungstag und Bekanntmachung des Hinweises auf die Patenterteilung: **27.08.2014**
(21) Anmeldenummer: 12166759.6
(22) Anmeldetag: 04.05.2012
(51) Int. Cl.: G01M 3/04, G01M 3/26, E04B 1/66, F17D 5/02

(54) **Prüfvorrichtung zur Prüfung der Dichtigkeit eines hochwasserdichten Fensters**
Testing device for testing the permeability of an extremely waterproof window
Dispositif de vérification de l'étanchéité d'une fenêtre hautement étanche

(30) Priorität: 06.05.2011 DE 102011050162
(43) Veröffentlichungstag der Anmeldung: 07.11.2012
(73) Patentinhaber: ACO SEVERIN AHLMANN GMBH & CO. KG, 24768 Rendsburg (DE)
(72) Erfinder: Harder, Bernd, 24808 Jevenstedt (DE); Riesch, Sebastian, 29525 Uelzen (DE)
(74) Vertreter: Bohnenberger, Johannes

(56) Entgegenhaltungen:
- FR-A1- 2 655 366
- JP-A- 62 298 740

## Beschreibung

Die Erfindung betrifft eine Prüfvorrichtung zum Prüfen der Dichtigkeit eines hochwasserdichten Fensters.

In zunehmendem Maße werden in hochwassergefährdeten Gegenden Bauten mit Kellern errichtet, welche gegen Hochwasser gesichert sein sollen. Hierzu werden hochwasserdichte Fenster eingebaut, die bis zu einem Wasserdruck von 0,1 bis 0,13 bar wasserdicht sein sollen. Allerdings lässt sich dies bisher nicht prüfen, so dass einerseits der Bauherr nicht weiß, ob seine Fenster den Anforderungen genügen und andererseits der Hersteller bzw. Bauunternehmer nicht weiß, ob dann, wenn es tatsächlich zur "Katastrophe" kommt, die von ihm eingebauten Fenster wirklich dicht sind oder ob Regressansprüche zu befürchten sind.

Aus der FR 2 655 366 A1 ist eine Prüfvorrichtung der eingangs genannten Art bekannt. Nachteilig an der Prüfvorrichtung ist, dass diese technisch sehr aufwändig ist.

Der Erfindung liegt die Aufgabe zu Grunde, eine technisch einfache Vorrichtung zum Prüfen der Dichtigkeit von hochwasserdichten Fenstern aufzuzeigen.

Diese Aufgabe wird durch die Prüfvorrichtung nach Patentanspruch 1 gelöst.

Insbesondere wird die Aufgabe durch eine Prüfvorrichtung zum Prüfen der Dichtigkeit eines hochwasserdichten Fensters gelöst, welche eine Verschlusseinrichtung umfasst, die derart geformt ist, dass sie an das Fenster, oder an eine, das Fenster umgebende Maueröffnung dicht anlegbar ist. Es ist eine Anpressvorrichtung vorgesehen zum festen Anlegen der Verschlusseinrichtung. Weiterhin ist eine Befüllvorrichtung vorgesehen zum Befüllen eines Zwischenraumes zwischen dem Fenster und der Verschlusseinrichtung. Die Anpressvorrichtung ist als mit Luft befüllbarer Balg oder Sack zur Abstützung in einem vor dem Fenster angebrachten Lichtschacht ausgebildet. Den Balg bzw. Sack muss man lediglich hinreichend fest aufpumpen, um eine sehr hoher Anpresskraft zu erzielen. Hierdurch kann die Anpressvorrichtung besonders einfach ausgebildet werden. Zudem kann in einfachster Weise ein sehr hoher Anpressdruck erzeugt werden. Es wird also auf einem sehr eng begrenzten Raum, nämlich zwischen dem Fenster und der Verschlusseinrichtung der Hochwasserfall "simuliert".

Vorzugsweise wird als Befüllungsmedium Wasser verwendet. Jedoch ist es auch möglich, Gas (insbesondere Luft) zu verwenden, wobei dann die Dichtigkeit dadurch festgestellt wird, dass nach Aufbringen eines vorbestimmten Druckes der darauf über die Zeit folgende Druckabfall protokolliert wird, da dieser ein Maß für die Gasdichtigkeit (und damit Wasserdichtigkeit) des Fensters darstellt.

Die Befüllvorrichtung weist vorzugsweise Mittel zur Erzeugung eines einstellbaren Druckes im Zwischenraum auf. Es wird also nicht irgendein Druck erzeugt, sondern eben ein vorbestimmter Druck.

Vorzugsweise ist die Anpressvorrichtung derart ausgebildet, dass die Verschlusseinrichtung zu einem wesentlichen Teil ihrer Fläche mit einer Anpresskraft beaufschlagt wird. Dies führt dazu, dass die Verschlusseinrichtung selbst keine allzu hohe Stabilität aufweisen muss, selbst wenn mit einem relativ hohen Druck im Zwischenraum zwischen der Verschlusseinrichtung und dem Fenster gearbeitet wird und das Fenster (und damit auch die Verschlusseinrichtung) großflächig ist.

Um die Prüfvorrichtung möglichst einfach und zeitsparend verwenden zu können, ist es von Vorteil, wenn die Verschlusseinrichtung gemeinsam mit der Anpressvorrichtung gehandhabt werden kann, die beiden Teile also miteinander verbunden sind. Vorzugsweise sind Mess- und/oder Einstellmittel vorgesehen, über welche der Druck im Zwischenraum mess- und/oder einstellbar ist, wodurch definierte Verhältnisse und reproduzierbare Prüfergebnisse erzielbar sind.

Um die Dichtigkeit des Fensters festzustellen, muss bei Befüllung des Zwischenraums mit Wasser eine Person hinter dem Fenster, also im Innenraum des Gebäudes bzw. Kellers stehen, um das Eindringen von Wasser feststellen zu können. Das Aufbringen der Andruckkraft und das Einbringen von Wasser kann dann durch eine zweite Bedienungsperson von außen geschehen. Bei einer bevorzugten Ausführungsform der Erfindung ist die Prüfvorrichtung so ausgebildet, dass sie von einer einzigen Bedienungsperson betätigbar ist, wozu es von Vorteil ist, wenn die Anpressvorrichtung durch das geöffnete Fenster betätigbar ist. Das Einfüllen des Prüfmediums (Wasser oder auch Gas) geschieht dann über ferngesteuerte Pumpeinrichtungen.

Bevorzugte Ausführungsformen der Erfindung ergeben sich aus der nachfolgenden Beschreibung von Ausführungsbeispielen, die anhand von Abbildungen erläutert werden. Hierbei zeigen
- Fig. 1: eine erste Ausführungsform der Erfindung in einem schematisierten Querschnitt und
- Fig. 2: eine zweite Ausführungsform der Erfindung mit einer Darstellung entsprechend der nach Fig. 1.

In der nachfolgenden Beschreibung werden für gleiche und gleich wirkende Teile dieselben Bezugsziffern verwendet.

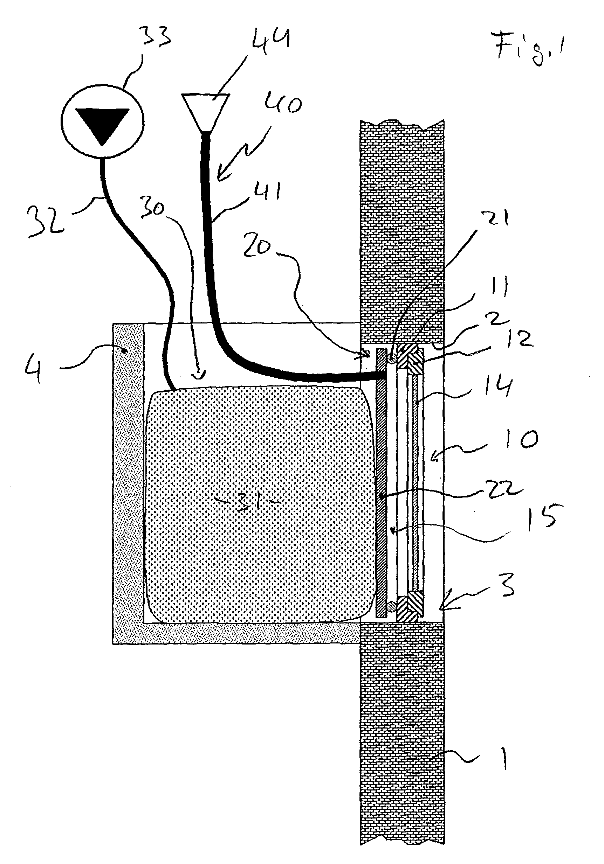

In Fig. 1 ist in einem Längsschnitt eine Wand 1 eines Kellergeschoßes gezeigt, in deren Öffnung 3 eine Laibung 2 sitzt, in welcher ein Fenster 10 mittels einer Zarge 11 dicht angebracht ist. Vor der Öffnung 3 ist ein Lichtschacht 4 (stark schematisiert gezeigt) angebracht. Das Fenster 10 umfasst weiterhin einen Rahmen 12, in welchem eine Scheibe 14 sitzt. Der Rahmen 12 ist gegenüber der Zarge 11 abgedichtet.

Die erfindungsgemäße Prüfvorrichtung umfasst eine Verschlusseinrichtung 20, die einen Verschlussdeckel 22 und eine Dichtung 21 umfasst. Der Verschlussdeckel 22 und die Dichtung 21 sind so ausgebildet, dass zwischen der Verschlusseinrichtung 20 und dem Fenster 10 ein ringsum abgedichteter Zwischenraum 15 entsteht. Die Abdichtung könnte auch zwischen der Verschlusseinrichtung 20 und der Laibung 2 bewerkstelligt werden.

Zum Andrücken der Verschlusseinrichtung 20 auf das Fenster 10 bzw. dessen Zarge 11 ist eine Anpressvorrichtung 30 vorgesehen, welche einen Luftsack 31 umfasst, der dann, wenn er über einen Schlauch 32 durch eine Luftpumpe 33 aufgeblasen wird, durch Anlage einerseits am Lichtschacht 4 bzw. dessen Innenwand und andererseits an der Verschlusseinrichtung 20 bzw. deren Verschlussdeckel 22 diesen unter Verformung der Dichtung 21 abdichtend auf die Zarge 11 presst.

Durch den Verschlussdeckel 22 hindurch führt ein Schlauch 41, mit einem endseitigen Trichter 44, die zusammen die Befüllvorrichtung 40 bilden. Es sei an dieser Stelle betont, dass die Befüllvorrichtung mittels eines Trichters rein symbolisch dargestellt ist und jede andere Flüssigkeitszufuhr möglich ist.

Nach Aufblasen des Luftsackes 31 wird über die Befüllvorrichtung 40 ein Zwischenraum 15 zwischen der Verschlusseinrichtung 20 und dem Fenster 10 mit Wasser befüllt. Vorzugsweise ist eine Entlüftungsvorrichtung vorgesehen, so dass das eingefüllte Wasser das im Zwischenraum 15 befindliche Gas (die Luft) verdrängen kann. Vorzugsweise ist hierbei der Schlauch 41 durchsichtig gestaltet, so dass er bis zu einer (vorzugsweise mittels einer Marke kenntlich gemachten) Höhe über dem Oberrand des Fensters 10 befüllt werden kann, um einen definierten Wasserdruck im Zwischenraum 15 aufzubauen. Eine hinter dem Fenster (in Fig. 1 rechts) stehende Bedienungsperson kann nun feststellen, ob Flüssigkeit eindringt bzw. das Fenster dicht ist.

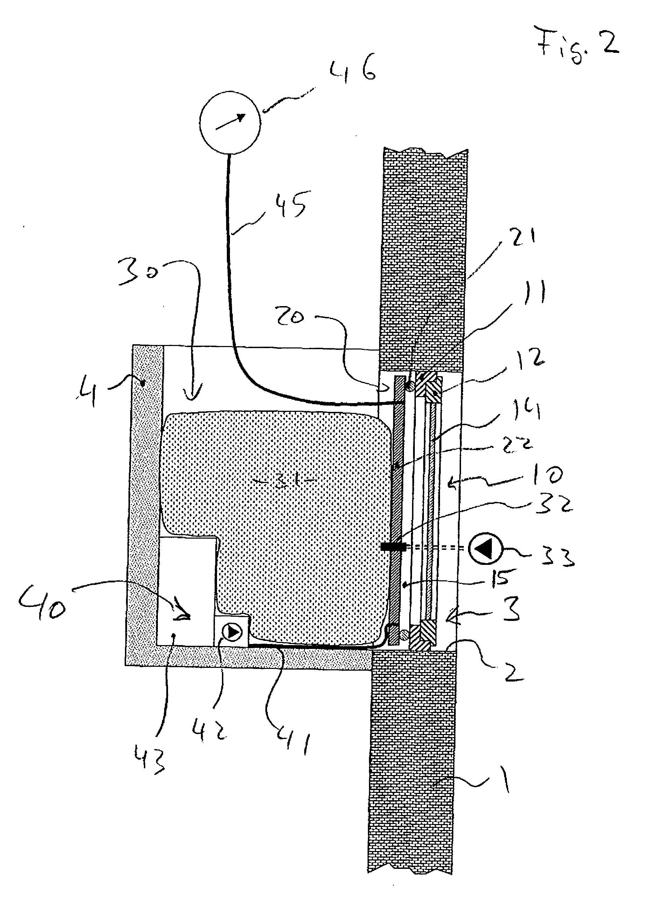

Die in Fig. 2 gezeigte Ausführungsform der Erfindung unterscheidet sich von der nach Fig. 1 zunächst einmal dadurch, dass der Luftsack 31 über die Leitung 32 nach Öffnen des Fensters 10 mittels der Pumpe 33 von innen (in Fig. 2 rechts) gefüllt werden kann. Nach Befüllung des Luftsacks 31 und damit Anpressen der Verschlusseinrichtung 20 an das Fenster 10 bzw. dessen Zarge 11 wird die Leitung 32 von der Pumpe 33 getrennt und (durch ein Ventil) verschlossen. Der Schlauch 41, der durch den Verschlussdeckel 22 in den Zwischenraum 15 führt, geht zu einer Pumpe 42, welche Wasser aus einem Tank 43, mit dem sie zusammen die Befüllvorrichtung 40 bildet, in Verbindung steht. Die Entlüftung funktioniert hier über eine Entlüftungsvorrichtung 45 (in Fig. 2 als Schlauch angedeutet), wobei dieser Schlauch 45 mit einer Druckmessvorrichtung 46 in Verbindung steht, so dass die Bedienungsperson die Pumpe 42 so lange laufen lassen kann, bis der Druck, den die Druckmesseinrichtung 46 anzeigt, die definierte Höhe erreicht hat. Alternativ zu einer Befüllung mit Wasser ist es auch möglich, lediglich Luft in den Zwischenraum 15 zu pumpen und nach Stillstand der Pumpe unter hermetischem Abschluss des Zwischenraums 15 zu beobachten, wie sich der Druck in dem Zwischenraum 15 verhält. Bleibt er über längere Zeit konstant, so kann von einer absoluten Dichtigkeit ausgegangen werden.

### Bezugszeichenliste

- 1: Wand
- 2: Laibung
- 3: Öffnung
- 4: Lichtschacht
- 10: Fenster
- 11: Zarge
- 12: Rahmen
- 14: Scheibe
- 15: Zwischenraum
- 20: Verschlusseinrichtung
- 21: Dichtung
- 22: Verschlussdeckel
- 30: Anpressvorrichtung
- 31: Luftsack
- 32: Laibung
- 33: Pumpe
- 40: Befüllvorrichtung
- 41: Schlauch
- 22: Pumpe
- 43: Tank
- 44: Trichter
- 45: Entlüftungsvorrichtung
- 46: Druckmesseinrichtung

## Patentansprüche

1. Prüfvorrichtung zum Prüfen der Dichtigkeit eines hochwasserdichten Fensters (10), umfassend
eine Verschlusseinrichtung (20), die derart geformt ist, dass sie an das Fenster (10) oder an eine, das Fenster umgebende Maueröffnung (2) dicht anlegbar ist,
eine Anpressvorrichtung (30) zum festen Anlegen der Verschlusseinrichtung (20) und
eine Befüllvorrichtung (40) zum Befüllen eines Zwischenraumes (15) zwischen dem Fenster (10) und der Verschlusseinrichtung (20)
**dadurch gekennzeichnet, dass**
die Anpressvorrichtung (30) als mit Luft befüllbarer Balg oder Sack (31) zur Abstützung in einem vor dem Fenster (10) angebrachten Lichtschacht (4) ausgebildet ist.

2. Prüfvorrichtung nach Anspruch 1,
**dadurch gekennzeichnet, dass**
die Befüllvorrichtung (40) Mittel (44; 22, 46) zur Erzeugung eines einstellbaren Druckes im Zwischenraum (15) umfasst.

3. Prüfvorrichtung nach einem der vorhergehenden Ansprüche,
**dadurch gekennzeichnet, dass**
die Anpressvorrichtung (30) derart ausgebildet ist, dass die Verschlusseinrichtung (20) zu einem wesentlichen Teil ihrer Fläche (22) mit einer Anpresskraft beaufschlagt wird.

4. Prüfvorrichtung nach einem der vorhergehenden Ansprüche,
**dadurch gekennzeichnet, dass**
die Anpressvorrichtung (30) mit der Verschlusseinrichtung (20) zur gemeinsamen Handhabung verbunden ist.

5. Prüfvorrichtung nach einem der vorhergehenden Ansprüche.
**dadurch gekennzeichnet, dass**
Mess- und/oder Einstellmittel vorgesehen sind, über die der Druck im Zwischenraum (15) mess- und/oder einstellbar ist.

6. Prüfvorrichtung nach einem der vorhergehenden Ansprüche,
**dadurch gekennzeichnet, dass**
die Anpressvorrichtung (30) durch das geöffnete Fenster (10) betätigbar ist.

## Claims

1. Testing device for testing the tightness of a flood-proof window (10), comprising
a closure device (20) which is shaped in such a way that it can be applied sealingly to the window (10) or to an opening (2) in the wall surrounding the window,
a pressure-application device (30) to effect secure application of the closure device (20) and
a filling device (40) for filling an intermediate space (15) between the window (10) and the closure device (20),
**characterised in that**
the pressure-application device (30) is in the form of a bellows or bag (31), which is arranged to be filled with air, for support in a light well (4) installed in front of the window (10).

2. Testing device according to claim 1,
**characterised in that**
the filling device (40) has means (44; 22, 46) for generating an adjustable pressure in the intermediate space (15).

3. Testing device according to either one of the preceding claims,
**characterised in that**
the pressure-application device (30) is constructed in such a way that the closure device (20) is acted upon by a pressing force over a substantial portion of its surface (22).

4. Testing device according to any one of the preceding claims,
**characterised in that**
the pressure-application device (30) is connected to the closure device (20) for joint handling.

5. Testing device according to any one of the preceding claims,
**characterised in that**
measuring and/or adjusting means are provided by means of which the pressure in the intermediate space (15) can be measured and/or adjusted.

6. Testing device according to any one of the preceding claims,
**characterised in that**
the pressure-application device (30) is operable through the opened window (10).

## Revendications

1. Dispositif de vérification destiné à vérifier l'étanchéité d'une fenêtre hautement étanche (10), comprenant
un dispositif de fermeture (20), qui est configuré de telle manière qu'il soit applicable de façon étanche sur la fenêtre (10) ou sur une baie (2) entourant la fenêtre,
un dispositif de pression (30) pour l'application ferme du dispositif de fermeture (20), et
un dispositif de remplissage (40) pour remplir un espace intermédiaire (15) entre la fenêtre (10) et le dispositif de fermeture (20),
**caractérisé en ce que** le dispositif de pression (30) est réalisé sous la forme d'un soufflet ou d'un sac (31) pouvant être rempli d'air destiné à s'appuyer dans un puits de lumière (4) agencé devant la fenêtre (10).

2. Dispositif de vérification selon la revendication 1, **caractérisé en ce que** le dispositif de remplissage (40) comprend des moyens (44 ; 22, 46) pour produire une pression réglable dans l'espace intermédiaire (15).

3. Dispositif de vérification selon l'une quelconque des revendications précédentes, **caractérisé en ce que** le dispositif de pression (30) est réalisé de telle manière que le dispositif de fermeture (20) soit soumis à une force de pression sur une partie essentielle de sa face (22).

4. Dispositif de vérification selon l'une quelconque des revendications précédentes, **caractérisé en ce que** le dispositif de pression (30) est assemblé au dispositif de fermeture (20) en vue d'une manipulation commune.

5. Dispositif de vérification selon l'une quelconque des revendications précédentes, **caractérisé en ce qu'**il est prévu des moyens de mesure et/ou de réglage, par lesquels la pression dans l'espace intermédiaire (15) peut être mesurée et/ou réglée.

6. Dispositif de vérification selon l'une quelconque des revendications précédentes, **caractérisé en ce que** le dispositif de pression (30) peut être actionné à travers la fenêtre ouverte (10).
